(19) **Europäisches Patentamt / European Patent Office / Office européen des brevets**

(11) **EP 2 184 374 B1**

(12) **EUROPEAN PATENT SPECIFICATION**

(45) Date of publication and mention
of the grant of the patent:
**15.01.2020 Bulletin 2020/03**

(21) Application number: **08778229.8**

(22) Date of filing: **10.07.2008**

(51) Int Cl.:
$C22C\ 38/00^{(2006.01)}$    $C22C\ 38/02^{(2006.01)}$
$C22C\ 38/04^{(2006.01)}$    $C22C\ 38/06^{(2006.01)}$
$C22C\ 38/38^{(2006.01)}$    $C22C\ 38/18^{(2006.01)}$
$B32B\ 15/01^{(2006.01)}$    $C23C\ 2/02^{(2006.01)}$
$C23C\ 2/06^{(2006.01)}$    $C23C\ 2/28^{(2006.01)}$
$C21D\ 9/48^{(2006.01)}$    $C21D\ 8/04^{(2006.01)}$
$C22C\ 38/22^{(2006.01)}$    $C22C\ 38/24^{(2006.01)}$
$C22C\ 38/26^{(2006.01)}$    $C22C\ 38/28^{(2006.01)}$
$C22C\ 38/32^{(2006.01)}$

(86) International application number:
**PCT/JP2008/062878**

(87) International publication number:
**WO 2009/008553 (15.01.2009 Gazette 2009/03)**

(54) **HIGH-STRENGTH HOT-DIP GALVANIZED STEEL SHEET AND PROCESS FOR PRODUCING THE SAME**

HOCHFESTES HEISSVERZINKTES STAHLBLECH UND HERSTELLUNGSVERFAHREN DAFÜR

TÔLE D'ACIER GALVANISÉE PAR TREMPAGE À CHAUD, DE HAUTE RÉSISTANCE, ET SON PROCÉDÉ DE FABRICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.07.2007 JP 2007181946**

(43) Date of publication of application:
**12.05.2010 Bulletin 2010/19**

(73) Proprietor: **JFE Steel Corporation**
**Tokyo, 100-0011 (JP)**

(72) Inventors:
• **ONO, Yoshihiko**
**Tokyo 100-0011 (JP)**
• **KIMURA, Hideyuki**
**Tokyo 100-0011 (JP)**
• **OKUDA, Kaneharu**
**Tokyo 100-0011 (JP)**

• **FUJITA, Takeshi**
**Tokyo 100-0011 (JP)**
• **SAKURAI, Michitaka**
**Tokyo 100-0011 (JP)**

(74) Representative: **Grünecker Patent- und Rechtsanwälte**
**PartG mbB**
**Leopoldstraße 4**
**80802 München (DE)**

(56) References cited:
EP-A1- 1 195 447    JP-A- S56 163 219
JP-A- S56 163 219    JP-A- 2001 207 237
JP-A- 2001 207 238    JP-A- 2001 247 946
JP-A- 2001 303 178    JP-A- 2001 303 178
JP-A- 2002 322 537    JP-A- 2003 129 172
US-A- 4 314 862    US-B1- 6 306 527
US-B1- 6 312 536

**Description**

Technical Field

The present invention relates to a galvanized steel sheet which is suitably used, for example, in an automobile and a home electric appliance field and which has a low yield stress and superior anti-aging property and bake hardenability and to a method for producing the galvanized steel sheet.

Background Art

In recent years, reduction in thickness of a steel sheet in order to improve fuel consumption by lightening an automobile body and increase in strength of a steel sheet in order to improve safety have been pursued. However, the increase in strength of a steel sheet generally causes deterioration of press-formability, i.e., wrinkle, which is called surface distortion, on the order of approximately several tens of micrometers is generated, so that degradation in the appearance of body shape disadvantageously occur.

In order to solve the above problem, a steel sheet (BH steel sheet) which has low strength in press forming to be easily pressed and which exhibits high bake hardenability in a paint baking step performed after press formation has been developed. This steel sheet is obtained by controlling a dissolved C amount by addition of Ti and Nb to ultralow-carbon steel used as a base material, has superior surface distortion resistance since a yield stress (hereinafter referred to as "YP" in some cases) is low, such as approximately 240 MPa at a strength level of 340 MPa, and ensures dent resistance by increasing a yield stress (YP') after press forming and paint baking to approximately 300 MPa.

However, in view of the weight reduction, a steel sheet having a thickness smaller than that of a current 340BH steel sheet having a thickness of 0.65 to 0.80 mm has been desired, and for example, in order to reduce the thickness by 0.05 mm, the yield stress (YP') after press formation and paint baking must be increased to approximately 350 MPa or more. In addition, in order to ensure a high YP' while a low YP is maintained, a steel sheet is required which has high paint bake hardenability (hereinafter referred to as "BH" in some cases) and work hardenability (hereinafter referred to as "WH" in some cases).

From the situation as described above, for example, in Patent Document 1, a method for obtaining a steel sheet which has a low yield stress besides high WH and BH properties and which further has superior anti-aging property has been disclosed in which annealing and cooling conditions of steel containing 0.005% to 0.0070% of C, 0.01% to 4.0% of Mn, and 0.01% to 3.0% of Cr are appropriately controlled, and in which the microstructure obtained by annealing is made to be a single phase transformed in low temperature.

In addition, in Patent Document 2, a method for obtaining a steel sheet having superior anti-aging property, shape fixability, and dent resistance besides high WH and BH properties and a low yield stress of 300 MPa or less has been disclosed. In this method, the steel sheet is formed by appropriately controlling annealing and cooling conditions of steel containing 0.04% or less of C, 0.5% to 3.0% of Mn, and 0.01% to 1.0% of Mo so that after annealing, a composite microstructure is obtained which includes 0.5% to less than 10% of retained austenite on a volume fraction basis and the balance being ferrite and a hard phase composed of bainite and/or martensite.

In Patent Document 3, a method for obtaining a steel sheet having high strength and high bake hardenability (BH) has been disclosed, which is obtained by appropriately controlling cooling conditions after annealing for steel containing 0.01% to less than 0.040% of C, 0.3% to 1.6% of Mn, 0.5% or less of Cr, 0.5% or less of Mo, and 1.3% to 2.1% of Mn+1.29Cr+3.29Mo so that the microstructure after annealing includes, on a volume fraction basis, 70% or more of ferrite and 1% to 15% of martensite.

In Patent Document 4, a method for obtaining a steel sheet having superior bake hardenability, anti-aging property, and press-formability has been disclosed, which is obtained by the steps of, after steel containing 0.0025% to less than 0.04% of C, 0.5% to 2.5% of Mn, and 0.05% to 2.0% of Cr is annealed at a temperature between the Ac1 transformation point and less than the Ac3 transformation point, performing cooling at a cooling rate of 15 to 200°C/s in the temperature range of 650 to 450°C, and further performing cooling at a cooling rate of less than 10°C/s in the temperature range defined by the amounts of C, Mn, and Cr.

JP 2001 303178 A discloses a high tension galvanized steel sheet excellent in ductility and profitability having a microstructure comprising martensite 5-25 vol % and the balance ferrite.

Patent Document 1: Japanese Unexamined Patent Application Publication No. 6-122940
Patent Document 2: Japanese Unexamined Patent Application Publication No. 2005-281867
Patent Document 3: Japanese Unexamined Patent Application Publication No. 2006-233249
Patent Document 4: Japanese Unexamined Patent Application Publication No. 2006-52465

Disclosure of Invention

However, the above conventional techniques have the following problems.

For example, in the technique disclosed in the Patent Document 1, as the evaluation of the anti-aging property, the restoration amount of yield point elongation (hereinafter referred to as "YPE1" in some cases) after an artificial aging treatment at 100°C for 1 hour was used; however, when an equivalent aging time at 30°C is calculated using Hundy's equation shown by equation (1) (disclosed by Hundy, B. B "Accelerated Strain Ageing of Mild Steel", J. Iron & Steel Inst., 178, pp. 34 to 38, (1954)), it is approximately 18 days at 30°C, and the technique described above cannot be always said to be superior in terms of anti-aging property. In addition, in order to obtain a single phase microstructure transformed in low temperature, for example, annealing was performed at an extremely high temperature region of 860 to 980°C; however, in this case, troubles, such as sheet breakage, may occur in some cases. Accordingly, development is required to form a steel sheet having superior anti-aging property without performing high temperature annealing.

$$Log_{10}(t_r/t)=4,400(1/T_r-1/T)-log_{10}(T/T_r) \qquad (1)$$

T: Acceleration aging temperature (K)
$T_r$: Temperature (K) to be evaluated
t: Aging time (Hr) at acceleration aging temperature T
$t_r$: Equivalent aging hour (Hr) converted at temperature $T_r$ (K) to be evaluated

According to the technique described in the Patent Document 2, in order to enhance work hardenability (WH), 0.01% to 1.0% and preferably 0.1% to 0.6% of Mo is contained, and as a microstructure, retained austenite is used. However, since Mo is a very expensive element, and when 0.18% to 0.56% of Mo is added as disclosed in the example, the cost is considerably increased. On the other hand, in the comparative example among the examples in which the addition amount of Mo is extremely low, YR is high, and WH is extremely low. Accordingly, development of a steel sheet having a low YR and a high WH must be performed without using expensive Mo.

According to the technique disclosed in the Patent Document 3, the volume fraction of martensite and the solute C in ferrite are controlled, and as cooling after annealing to obtain high bake hardenability, cooling is performed from a temperature of 550 to 750°C to a temperature of 200°C or less at a cooling rate of 100°C/s. However, in order to satisfy the cooling conditions as described above, a specific method must be performed in which, for example, quenching is performed in jet water, as disclosed in the Patent Document 3, and it is difficult to perform manufacturing in a current continuous galvanizing line.

According to the technique disclosed in the Patent Document 4, when cooling is performed after annealing, cooling in the temperature range of 650 to 450°C is performed at a cooling rate of 15 to 200°C/s, and cooling in the temperature range defined by the amounts of C, Mn, and Cr is performed at less than 10°C/s. According to the example, cooling from the annealing temperature to 680°C is performed at 3°C/s, rapid cooling is performed at a rate of 80°C/s to a temperature represented by Ts, slow cooling is performed at a rate of less than 10°C/s to a temperature represented by Tf, and subsequently, cooling to 180°C and then to room temperature are performed at 15°C/s and 100°C/s, respectively. The technique described above can be performed in a CAL which performs no galvanizing treatment and which is provided with an overaging zone; however, the technique is difficult to perform in a CGL which performs a galvanizing treatment during cooling and which is not generally provided with an overaging apparatus (when a galvanizing treatment is performed, a steel sheet must be dipped in a galvanizing bath at a temperature of approximately 460°C for several seconds, and when alloying is further performed, a steel sheet must be heated to 500 to 600°C and maintained for several tens of seconds). In addition, when a CGL, which has a galvanizing treatment apparatus, is provided with an overaging zone, the line length is extremely increased; hence, in general, an overaging zone is not provided therefor, and after a galvanizing treatment, gas cooling is performed. Hence, the case shown in the example in which the temperature range of 650 to 450°C is cooled at a rate of 15°C/s or more, and the temperature range of 390°C or less is cooled at an extremely low cooling rate of approximately 1.3°C/s is difficult to perform by a heat cycle performed in a current CGL. After cooling is performed to room temperature in accordance with the above cooling pattern, galvanizing may be performed; however, the cost is seriously increased in this case. Hence, it is necessary to develop a method for obtaining a superior material by a general heat treatment cycle in a CGL without using the thermal history as described above.

The present invention has been conceived to solve the above problems, and an object of the present invention is to provide a high strength galvanized steel sheet having a low yield stress and superior anti-aging property and bake hardenability and a method for manufacturing the high strength galvanized steel sheet, and even if a general heat treatment cycle in a CGL is performed, this high strength galvanized steel sheet can be obtained without using expensive Mo.

In order to achieve the above object, through intensive research, the following knowledge was obtained.

By controlling Mn and Cr, which have high hardening properties, in a specific region, perlite and bainite are suppressed even in a heat treatment cycle in a CGL, which has a low cooling rate, and hence a low yield stress and high work hardenability can be obtained.

In addition, at the same Mn equivalent, as the Mn content is decreased, the A1 and A3 lines in a Fe-C phase diagram are shifted to a higher temperature side and a higher C content side, and hence the amount of solute C in ferrite is increased. Accordingly, when the Mn content is decreased, the BH property, which is a strain aging phenomenon of solute C, is improved. However, when the Mn content is excessively decreased, the aging property is degraded; hence, in order to simultaneously obtain the anti-aging property and the bake hardenability, it is important to control the Mn content in an appropriate range.

That is, it was found that when the anti-aging property and the bake hardenability are well balanced at a high level by an appropriate control of the Mn content, and when the Mn equivalent (=Mn+1.3Cr) is controlled in an appropriate range by adjustment of the Cr content, a high strength galvanized steel sheet having a low yield stress and a high work hardenability can be manufactured, and as a result, the present invention was made.

The present invention has been conceived based on the following knowledge, and the concept thereof is defined in the claims.

In the present invention, % indicating the composition of steel is always on a mass percent basis. In addition, the high strength galvanized steel sheet is a galvanized steel sheet having a tensile strength of 340 MPa or more.

According to the present invention, a high strength galvanized steel sheet having a low yield stress and superior anti-aging property and bake hardenability can be obtained. As a result, when the above steel sheet is used for automobile inner and outer panel application, weight reduction can also be achieved by thickness reduction.

In addition, since the high strength galvanized steel sheet of the present invention has the superior properties described above, besides an automobile steel sheet, it can be widely used for home electric appliance application and the like; hence, the steel sheet of the present invention has industrial advantages.

Best Modes for Carrying Out the Invention

According to the present invention, the composition is defined such that the Mn content is more than 1.0% to 1.8% and the Cr content is more than 0.5, and in addition, the Mn equivalent is controlled in an appropriate range that satisfies $1.9 \leq$ Mn (mass percent)$+1.3$Cr (mass percent)$\leq 2.8$. In addition, the microstructure is designed such that a ferrite phase and 2% to 15% of martensite on an area ratio basis are included, and that the total area ratio of perlite and/or bainite is 1.0% or less. These are the features of the present invention and are the most important points. When the composition and the microstructure as described above are prepared, as a result, a high strength galvanized steel sheet having a low yield stress and superior anti-aging property and bake hardenability can be obtained.

In addition, in order to manufacture the high strength galvanized steel sheet as described above which has a low yield stress and superior anti-aging property and bake hardenability, annealing/ galvanizing conditions must be controlled, and according to the present invention, it is characterized in that annealing is performed at an annealing temperature of more than 750°C to less than 820°C, cooling is performed at an average cooling rate of 3 to 15°C/s in a temperature range from the annealing temperature to a temperature at which dipping into a galvanizing bath is performed, and after galvanizing is performed, cooling is performed at an average cooling rate of 5°C/s or more to a temperature of the Ms point or less.

Hereinafter, the present invention will be described in detail. First, the reasons for limiting chemical compositions of the steel of the present invention will be described.

C: 0.01% to 0.05%

C is effective to increase strength and is one of important elements of the present invention. According to the present invention, in order to ensure a predetermined amount or more of martensite, the content is set to 0.01% or more. On the other hand, when the C content is 0.08% or more, since the amount of martensite is excessively large, YP is increased, the BH amount is decreased, and in addition, the weldability is degraded. Hence, the C content is set to 0.05% or less in order to obtain a lower YP and a higher BH.

Si: 0.2% or less

Si has a high solid-solution strengthening ability, and a lower Si content is preferable in terms of decrease in yield strength (decrease in YP). However, since a Si content of up to 0.2% is permissible, the Si content is set to 0.2% or less.

Mn: more than 1.0% to 1.8%

Mn is the most important element of the present invention. When the Mn content is more than 1.8%, the amount of solute C in ferrite is decreased, and the BH property is degraded. In addition, when the Mn content is 1.0% or less, a high BH property is obtained since the amount of solute C in ferrite is large; however, on the other hand, the anti-aging property may be degraded in some cases. Hence, in order to simultaneously obtain the BH property and the anti-aging property, the Mn content is set in the range of more than 1.0% to 1.8% and is preferably set in the range of more than 1.0% to 1.6%.

P: 0.10% or less

P is an effective element to increase strength. However, when the P content is more than 0.10%, the yield strength (YP) is increased, and surface-distortion resistance is degraded. Furthermore, an alloying speed of a galvanizing layer is decreased, surface defect occur, and in addition, resistance against secondary work-embrittlement is degraded due to segregation in grain boundaries of a steel sheet. Accordingly, the P content is set to 0.10% or less.

S: 0.03% or less

S degrades ductility in hot rolling and enhances sensitivity of cracking in hot rolling; hence, the content is preferably decreased. Further, when the S content is more than 0.03%, the ductility of the steel sheet is degraded due to precipitation of fine MnS, and the press formability is degraded. Hence, the S content is set to 0.03% or less. In addition, in view of the press formability, the S content is preferably set to 0.015% or less.

Al: 0.1% or less

Al decreases inclusions in steel as a deoxidizing element, and in addition, it also functions to fix unnecessary solute N in steel in the form of a nitride. However, when the Al content is more than 0.1%, alumina inclusions in the form of clusters are increased, the ductility is degraded, and the press formability is also degraded. Hence, the Al content is set to 0.1% or less. In order to effectively use Al as a deoxidizing element and to sufficiently decrease oxygen in steel, 0.02% or more of Al is preferably contained.

N. less than 0.005%

Since N in a solid solution state is not preferably present in view of anti-aging property, the content is preferably decreased. In particular, when the N content is more than 0.008%, the amount of a nitride forming element necessary to fix N is increased, and hence manufacturing cost is increased. In addition, due to excessive generation of nitrides, the ductility and toughness are degraded. Hence, the N content is set to less than 0.005% in order to ensure the ductility and toughness.

Cr: more than 0.5%

Cr is a hardenability improving element and is a very important element for formation of martensite. In addition, since having a high hardenability and a low solid-solution hardenability as compared to those of Mn, Cr is effective to decrease YP, and in the present invention, Cr is positively added. However, when the Cr content is 0.5% or less, the hardenability and YP decreasing effect may not be obtained in some cases, and hence the content is set to more than 0.5% and is preferably more than 0.65%.
In addition, as described above, in order to simultaneously obtain the BH property and the anti-aging property, the content of Mn is limited; hence, even in a heat treatment cycle in a CGL in which the cooling rate is low, in order to suppress perlite and bainite and to decrease YP, the Mn equivalent must be controlled to be a predetermined level by adjusting the Cr content. Accordingly, the Cr content is set to more than 0.5% and is preferably set to more than 0.65%.

Mn+1.3Cr: 1.9% to 2.8%

The value of Mn+1.3Cr is one index indicating the hardenability, and it is important to optimally control the value in order to form martensite. When the value of Mn+1.3Cr is less than 1.9%, the hardenability becomes insufficient, and perlite and bainite are liable to be generated during cooling performed after annealing, so that YP is increased. On the other hand, when the value of Mn+1.3Cr is more than 2.8, the hardenability effect is saturated, and by excessive addition of alloying elements, manufacturing cost is increased. Hence, the value of Mn+1.3Cr is set in the range of 1.9% to 2.8% and is preferably set in the range of more than 2.3% to 2.8%.

Targeted properties of the steel according to the present invention can be obtained by those essential addition elements described above; however, besides those elements, whenever necessary, Mo, V, Ti, Nb may also be added.

B: 0.0005% to 0.01%

B is a hardenability improving element and is added in an amount of 0.0005% or more in order to stably form martensite. Furthermore, when 0.0015% to 0.004% of B is added, besides improvement in grain growth properties of ferrite, BH can be improved, and balance between decrease in YP and increase in BH can be further improved. However, when more than 0.01% of B is added, adverse influence on the mechanical properties and the productivity in casting are enhanced. Hence, the content thereof is set to 0.01% or less.

At least one of Mo: 0.15% or less, V: 0.5% or less, Ti: 0.1% or less, and Nb: 0.1% or less

Mo: 0.15% or less

Mo is an expensive element and is an element to increase YP; however, Mo is also an effective element which improves zinc coating surface quality, or improves hardenability and stably obtains martensite, and 0.01% or more of Mo may be added. However, when the Mo content is more than 0.15%, the effects thereof is saturated, and cost is seriously increased. Hence, when Mo is added, 0.15% or less of Mo may be added so that an adverse influence thereof, increase in YP, is not so significant. In view of reduction in cost and decrease in YP, the content of Mo is preferably decreased as small as possible, and Mo is preferably not to be added (0.02% or less of Mo being present as an inevitable impurity).

V: 0.5% or less

V is a hardenability improving element and may be added in an amount of 0.01% or more in order to stably form martensite. However, even when V is excessively added, an effect corresponding to the cost cannot be obtained. Hence, when V is added, the content thereof is set to 0.5% or less.

Ti: 0.1% or less, and Nb: 0.1% or less

Ti and Nb each form carbide, nitride and carbonitride and decrease the amounts of solute C and N, and in order to prevent degradation of mechanical properties during aging, each element in an amount of 0.01% or more may be added. However, even when the element in an amount of more than 0.1% is excessively added, the effect is saturated, and an effect corresponding to the cost cannot be obtained. Hence, when Ti and/or Nb is added, the content of each element is set to 0.1% or less.

In addition, the balance other than those elements described above includes Fe and inevitable impurities. As the inevitable impurities, for example, since O forms non-metal inclusions and has an adverse influence on the quality, the content of O is preferably decreased to 0.003% or less.

Next, the microstructure of the high strength galvanized steel sheet having excellent press formability of the present invention will be described.

A ferrite phase and 2% to 15% of martensite on an area ratio basis

The galvanized steel sheet of the present invention has a dual phase microstructure containing a ferrite phase and 2% to 15% of martensite on an area ratio basis. When the martensite is controlled in the range described above, the surface-distortion resistance and work-hardenability are improved, so that a steel sheet usable for automobile outer panel application can be obtained. When the area ratio of the martensite is more than 15%, the strength is significantly increased, and for example, as a steel sheet for an automobile inner/outer plate panel, that is intended by the present invention, sufficient surface-distortion resistance and press formability cannot be obtained. Hence, the area ratio of martensite is set to 15% or less. On the other hand, when the area ratio of martensite is less than 2%, YPE1 is liable to remain, and in addition, YP is increased, so that the surface-distortion resistance is degraded. Hence, the area ratio of martensite is set in the range of 2% to 15% and is preferably set in the range of 2% to 10%.

Total area ratio of perlite and bainite: 1.0% or less

In the case in which slow cooling is performed after annealing, and in particular, an alloying treatment is performed, when the Mn equivalent is not optimized, fine perlite or bainite is generated primarily adjacent to martensite, so that YR is increased. That is, since YP can be decreased when the total area ratio of perlite and/or bainite is set to 1.0% or less, this total area ratio is set to 1.0% or less.

In addition, in the steel sheet of the present invention, besides the ferrite phase, martensite, perlite, and bainite, retained $\gamma$ and/or inevitable carbides having an area ratio of approximately 1.0% may be contained.

Here, the area ratio can be obtained by the steps of polishing an L cross-section (vertical cross-section parallel to a rolling direction) of a steel sheet, etching the cross-section using nital, observing 12 visual fields at a magnification of 4,000 times power using a SEM, and performing image analysis of an obtained microstructure photograph. In the microstructure photograph, a blackish contrast region indicates ferrite, a region in which carbides are generated in the form of lamellas or points is regarded as perlite and bainite, and particles having a white contrast are regarded as martensite.

When the Mn equivalent and the cooling conditions after annealing are appropriately controlled, the microstructure can be controlled in the above area ratio range.

Next, conditions for manufacturing the high strength galvanized steel sheet of the present invention will be described.
The high strength galvanized steel sheet of the present invention is manufactured by the steps of forming a slab by melting steel adjusted in the above chemical composition range; then performing hot rolling, followed by (pickling) cold rolling; then, after annealing, performing cooling at an average cooling rate of 3 to 15°C/s in a temperature range from the annealing temperature to a temperature at which dipping into a galvanizing bath is performed; and after galvanizing, performing cooling at an average cooling rate of 5°C/s or more.

In this case, the method for melting and refining steel is not particularly limited, and an electric furnace may be used, or a converter may be used. In addition, as a method for casting steel after the melting and refining, a cast slab may be formed by a continuous casting method, or an ingot may be formed by an ingot-making method.

When the slab is hot-rolled after continuous casting, rolling may be performed after the slab is re-heated in a heating furnace, or direct rolling may be performed without heating the slab. In addition, after blooming is performed for the ingot thus formed, hot rolling may be performed.

Hot rolling may be performed in accordance with an ordinary method, for example, such that the temperature for heating the slab is set to 1,100 to 1,300°C, the finish rolling temperature is set to the Ar3 point or more, the cooling rate after the finish rolling is set to 10 to 200°C/s, and the coiling temperature is set to 400 to 750°C. The reduction ratio of cold rolling may be set to 50 to 85% which is the range performed in a general operation.

Hereinafter, annealing and galvanizing steps (CGL process), which are important in the present invention, will be described in detail.

Annealing temperature: more than 750°C to less than 820°C

The annealing temperature must be increased to an appropriate temperature in order to obtain a microstructure containing a ferrite phase and martensite. When the annealing temperature is 750°C or less, since austenite is not sufficiently formed, a predetermined amount of martensite cannot be obtained. Hence, for example, due to remaining YPE1, increase in YP, the surface-distortion resistance is degraded. On the other hand, when the annealing temperature is 820°C or more, the amount of solute C in ferrite is decreased, and a high BH amount may not be obtained in some cases. In addition, enrichment of C in austenite is not sufficiently performed, and perlite and bainite are liable to be generated during the subsequent cooling and alloying treatments, so that increase in YP ccurs. Hence, the annealing temperature is set to more than 750°C to less than 820°C.

Primary average cooling rate: 3 to 15°C/s

In manufacturing the galvanized steel sheet, after the annealing, the primary average cooling rate from the annealing temperature to a temperature at which dipping into a galvanizing bath is performed is set to 3 to 15°C/s. When the cooling rate is less than 3°C/s, since the perlite and bainite significantly generate during cooling, YP is increased. In addition, since perlite and bainite are generated, a predetermined amount of martensite cannot be obtained, and since YPE1 remains, YP is increased. On the other hand, when the cooling rate is more than 15°C/s, enrichment of C, Mn, and Cr in austenite is not sufficiently performed, and austenite is decomposed into perlite and bainite during the subsequent cooling and alloying treatments, so that the amounts thereof are increased; hence, YP is increased. In addition, enrichment of C in ferrite is suppressed, and a high BH amount may not be obtained in some cases. Hence, after the annealing, the primary average cooling rate is set to 3 to 15°C/s from the annealing temperature to a temperature at which dipping into a galvanizing bath is performed. A preferable average cooling rate is 5 to 15°C/s. In addition, a galvanizing bath temperature in a galvanizing treatment may be a common temperature, such as approximately 400 to 480°C.

In addition, after the galvanizing treatment is performed, whenever necessary, the alloying treatment may be performed. In this case, the alloying treatment after the galvanizing is performed, for example, such that after the dipping in a galvanizing bath is performed, whenever necessary, heating is performed to a temperature range of 500 to 700°C, and the temperature is maintained for several seconds to several tens of seconds. According to a conventional steel sheet in which the Mn equivalent is not optimized, the mechanical properties are seriously degraded by the alloying treatment as described above; however, according to the steel of the present invention, increase in YP is small even if the alloying treatment as described above is performed.

In addition, as the galvanizing conditions, a coating amount per one surface is preferably 20 to 70 g/m$^2$, and when the alloying treatment is performed, the Fe content in the coating layer is preferably set to 6% to 15%.

Secondary cooling rate: 5°C/s or more

In the secondary cooling to be performed after the galvanizing treatment or the alloying treatment, in order to obtain predetermined amount of martensite, cooling is performed at an average cooling rate of 5°C/s or more to a temperature of the Ms point or less. By slow cooling in which the secondary cooling rate is less than 5°C/s, perlite or bainite is generated at approximately 400 to 500°C, so that YP is increased. On the other hand, although it is not necessary to limit the upper limit of the secondary cooling rate, when it is more than 100°C/s, martensite is excessively hardened, so that the ductility is degraded. Hence, the second cooling rate is preferably 100°C/s or less. Accordingly, the secondary cooling rate is set to 5°C/s or more and is preferably set to 10 to 100°C/s.

Furthermore, in the present invention, temper rolling may also be performed on the steel sheet of the present invention after the heat treatment for shape flattening. In addition, in the present invention, a steel material is supposed to be manufactured by the steps including general steel making, casting, and hot rolling; however, by omitting part of the hot rolling step or all thereof, a steel material may be manufactured, for example, by thin-slab casting.

In addition, the surface of the galvanized steel sheet of the present invention may be further processed by an organic film treatment.

Examples

Example 1

Hereinafter, the present invention will be further described with reference to Examples.

Several types of steel having chemical compositions of steel A to Y shown in Table 1 were melted by vacuum melting, so that slabs were formed. After these slabs were heated to 1,200°C and were then hot rolled at a finish temperature of 850°C, cooling was performed, and coiling was then performed at 600°C, so that a hot-rolled band having a thickness of 2.5 mm was manufactured. After pickling was performed for the hot-rolled band thus obtained, cold rolling was performed at a reduction ratio of 70%, so that a cold-rolled steel sheet having a thickness of 0.75 mm was obtained.

Steels 0, W to Y are steels according to the invention. Steels A to N, P, Q are reference steels and steels R to V are comparative steels.

Table 1

| STEEL | CHEMICAL COMPOSITIONS (MASS PERCENT) | | | | | | | | | |
|---|---|---|---|---|---|---|---|---|---|---|
| | C | Si | Mn | P | S | Sol.Al | N | Cr | OTHERES | Mn+1.3Cr (%) |
| A | 0.042 | 0.02 | 1.08 | 0.010 | 0.015 | 0.035 | 0.0045 | 0.70 | - | 1.99 |
| B | 0.034 | 0.01 | 1.25 | 0.009 | 0.005 | 0.040 | 0.0043 | 0.71 | - | 2.17 |
| C | 0.028 | 0.01 | 1.42 | 0.009 | 0.005 | 0.040 | 0.0043 | 0.71 | - | 2.34 |
| D | 0.021 | 0.02 | 1.56 | 0.013 | 0.005 | 0.050 | 0.0040 | 0.72 | - | 2.50 |
| E | 0.013 | 0.01 | 1.78 | 0.009 | 0.012 | 0.040 | 0.0040 | 0.71 | - | 2.70 |
| F | 0.035 | 0.01 | 1.57 | 0.015 | 0.009 | 0.040 | 0.0040 | 0.57 | - | 2.31 |
| G | 0.032 | 0.02 | 1.56 | 0.010 | 0.015 | 0.035 | 0.0050 | 0.72 | - | 2.50 |
| H | 0.028 | 0.02 | 1.55 | 0.011 | 0.005 | 0.035 | 0.0050 | 0.92 | - | 2.75 |
| I | 0.022 | 0.01 | 1.56 | 0.009 | 0.005 | 0.040 | 0.0043 | 0.71 | - | 2.48 |
| J | 0.032 | 0.02 | 1.58 | 0.013 | 0.005 | 0.050 | 0.0040 | 0.73 | - | 2.53 |
| K | 0.042 | 0.01 | 1.57 | 0.009 | 0.012 | 0.040 | 0.0040 | 0.71 | - | 2.49 |
| L | 0.074 | 0.01 | 1.56 | 0.011 | 0.025 | 0.040 | 0.0040 | 0.72 | B: 0.0017 | 2.50 |

(continued)

| STEEL | CHEMICAL COMPOSITIONS (MASS PERCENT) | | | | | | | | | |
|---|---|---|---|---|---|---|---|---|---|---|
| | C | Si | Mn | P | S | Sol.Al | N | Cr | OTHERES | Mn+1.3Cr (%) |
| M | 0.032 | 0.01 | 1.58 | 0.011 | 0.009 | 0.030 | 0.0055 | 0.71 | - | 2.50 |
| N | 0.031 | 0.05 | 1.57 | 0.011 | 0.015 | 0.035 | 0.0035 | 0.71 | Mo:0.08 | 2.49 |
| O | 0.033 | 0.05 | 1.56 | 0.011 | 0.005 | 0.050 | 0.0050 | 0.70 | Mo:0.05 B: 0.002 | 2.47 |
| P | 0,033 | 0.05 | 1.55 | 0.010 | 0.012 | 0.035 | 0.0040 | 0.71 | Ti:0.02 V: 0.05 | 2.47 |
| Q | 0.032 | 0.02 | 1.58 | 0.011 | 0.009 | 0.035 | 0.0045 | 0.71 | Nb:0.01 | 2.50 |
| R | 0.028 | 0.02 | 1.85 | 0.011 | 0.005 | 0.050 | 0.0040 | 0.45 | - | 2.44 |
| S | 0.050 | 0.02 | 0.95 | 0.010 | 0.005 | 0.050 | 0.0040 | 0.90 | - | 2.12 |
| T | 0.055 | 0.02 | 2.02 | 0.011 | 0.005 | 0.040 | 0.0035 | 0.58 | - | 2.77 |
| U | 0.050 | 0.02 | 1.12 | 0.009 | 0.005 | 0.050 | 0.0040 | 0.52 | - | 1.80 |
| V | 0.004 | 0.01 | 1.77 | 0.011 | 0.025 | 0.040 | 0.0040 | 0.77 | - | 2.77 |
| W | 0.040 | 0.02 | 1.02 | 0.026 | 0.012 | 0.081 | 0.0018 | 0.7 | B:0.0015 | 1.93 |
| X | 0.029 | 0.01 | 1.37 | 0.018 | 0.005 | 0.064 | 0.0037 | 0.6 | B:0.0031 | 2.15 |
| Y | 0.028 | 0.01 | 1.38 | 0.008 | 0.0008 | 0.056 | 0.0029 | 0.64 | B:0.0015, Ti:0.004 | 2.21 |

Next, samples obtained by cutting off from the cold-rolled steel sheets, which were obtained as described above, were sequentially processed by the steps of performing annealing at annealing temperatures shown in Table 2 for 60 seconds in an infrared image furnace; performing primary cooling under conditions shown in Table 2; performing galvanizing (galvanizing bath temperature: 460°C); performing an alloying treatment (520°C × 15s); performing secondary cooling to a temperature of 150°C or less; and performing temper rolling at an extension rate of 0.4%. In this case, the galvanizing treatment was adjusted to have a coating weight of 50 g/m$^2$ per one surface, and the alloying treatment was adjusted so that the Fe content in the coating layer was 9% to 12%.

From the galvanized steel sheets obtained as described above, samples were obtained, and the area ratio of martensite and the total area ratio of perlite and/or bainite were measured. In addition, the tensile properties, work hardening amount (WH), bake hardening amount (BH), and yield point elongation (YPE1) obtained after an acceleration aging test were measured. The detailed measurement methods are described below.

(1) Area ratio of Martensite: After an L cross-section (vertical cross-section parallel to the rolling direction) was mechanically polished and was then etched with nital, 12 visual fields were observed by a scanning electron microscope (SEM) at a magnification of 4,000 times power, and quantification was performed using an obtained photograph (SEM photograph) of microstructure. In the photograph, particles having a white contrast were regarded as martensite, and remaining parts having a black contrast were regarded as ferrite, so that the ratio of martensite with respect to the overall area was obtained.

(2) Tensile Properties: JIS No. 5 test pieces were obtained in a 90°-direction (C direction) with respect to the rolling direction, and a tensile test in accordance with JIS Z2241 was performed, so that the yield stress (YP) and the tensile strength (TS) were measured.

(3) Work Hardenability Amount (WH): The difference between a stress at a pre-strain of 2% and the yield stress (YP) was measured.

(4) Bake Hardenability Amount (BH): The difference between a stress at a pre-strain of 2% and the yield stress obtained by a heat treatment corresponding to paint baking at 170°C for 20 minutes.

(5) Yield Point Elongation (YPE1) after Acceleration Aging Test: After a heat treatment at 100°C for 24 hours, YPE1 was measured by the tensile test (in accordance with JIS Z2241). In consideration of the case in which a steel sheet crosses the red line for export, the acceleration aging conditions were set so that the equivalent aging times obtained from Hundy's equation were 1.2 years at 30°C and approximately 2 months at 50°C.

The measurement results are shown in Table 2 together with the manufacturing conditions.

Table 2

| No. | STEEL NO. | ANNEALING AND GALVANIZING CONDITIONS | | | | TEMPER ROLLING | MICROSTRUCTURE | | | MECHANICAL PROPERTIES | | | | | | |
|---|---|---|---|---|---|---|---|---|---|---|---|---|---|---|---|---|
| | | ANNEALING TEMPERATURE (°C) | PRIMARY COOLING RATE (°C/s) | ALLOYING CONDITIONS | SECONDARY COOLING RATE (°C/s) | EXTENSION RATE (%) | PRIMARY MICROSTRUCTURE* | MARTENSITE AREA RATIO (%) | TOTAL AREA RATIO OF PERLITE AND BAINITE (%) | YP (MPa) | TS (MPa) | YR (%) | WH (MPa) | BH (MPa) | YP' (MPa) | YPEI AFTER AGING (%) |
| 1 | A | 770 | 12 | 520°C × 15s | 40 | 0.4 | F+M+P/B | 2.9 | 0.95 | 244 | 461 | 52.9 | 59 | 81 | 384 | 0.2 |
| 2 | B | 770 | 12 | 520°C × 15s | 40 | 0.4 | F+M+P/B | 2.8 | 0.73 | 234 | 455 | 51.4 | 61 | 78 | 373 | 0.1 |
| 3 | C | 780 | 5 | 520°C × 15s | 20 | 0.4 | F+M+P/B | 2.6 | 0.69 | 223 | 453 | 49.2 | 64 | 72 | 359 | 0 |
| 4 | D | 780 | 5 | 520°C × 15s | 20 | 0.4 | F+M+P/B | 2.6 | 0.58 | 217 | 452 | 48.0 | 67 | 66 | 350 | 0 |
| 5 | E | 800 | 5 | 520°C × 15s | 20 | 0.4 | F+M+P/B | 2.5 | 0.54 | 215 | 451 | 47,7 | 70 | 55 | 340 | 0 |
| 6 | F | 780 | 5 | 520°C × 15s | 20 | 0.4 | F+M+P/B | 4.2 | 0.72 | 235 | 477 | 49.3 | 70 | 66 | 371 | 0 |
| 7 | G | 780 | 5 | 520°C × 15s | 20 | 0.4 | F+M+P/B | 4.0 | 0.58 | 228 | 473 | 48.2 | 71 | 67 | 366 | 0 |
| 8 | H | 780 | 5 | 520°C × 15s | 20 | 0.4 | F+M+P/B | 4.1 | 0.52 | 224 | 475 | 47.2 | 75 | 66 | 365 | 0 |
| 9 | I | 780 | 5 | 520°C × 15s | 20 | 0.4 | F+M+P/B | 2.9 | 0.58 | 219 | 452 | 48.5 | 65 | 66 | 350 | 0 |
| 10 | J | 780 | 5 | 520°C × 15s | 20 | 0.4 | F+M+P/D F+M+P/B | 2.9 4.6 | 0.60 | 237 | 484 | 49.0 | 72 | 67 | 376 | 0 |
| 11 | K | 780 | 5 | 520°C × 15s | 20 | 0.4 | F+M+P/B | 5.6 | 0.59 | 243 | 498 | 48.8 | 80 | 66 | 389 | 0 |
| 12 | L | 780 | 5 | 520°C × i5s | 20 | 0.4 | F+M+P/B | 13.3 | 0.51 | 254 | 529 | 48.0 | 110 | 61 | 425 | 0 |
| 13 | M | 780 | 5 | 520°C × 15s | 20 | 0.4 | F+M+P/B | 42 | 0.61 | 228 | 475 | 48.0 | 72 | 66 | 366 | 0 |
| 14 | N | 780 | 5 | 520°C × 15s | 20 | 0.4 | F+M+P/B | 4.4 | 0.63 | 238 | 480 | 49.6 | 68 | 71 | 377 | 0 |
| 15 | O | 780 | 5 | 520°C × 15s | 20 | 0.4 | F+M+P/B | 4.3 | 0.64 | 236 | 478 | 49.4 | 67 | 68 | 371 | 0 |
| 16 | P | 780 | 5 | 520°C × 15s | 20 | 0.4 | F+M+P/B | 4.3 | 0.62 | 238 | 479 | 49.7 | 71 | 67 | 376 | 0 |
| 17 | Q | 780 | 5 | 520°C × 15s | 20 | 0.4 | F+M+P/B | 4.5 | 0.64 | 240 | 481 | 49.9 | 72 | 66 | 378 | 0 |
| 18 | R | 780 | 5 | 520°C × 15s | 20 | 0.4 | F+M+P/B | 4,5 | 0.53 | 235 | 482 | 48.8 | 71 | 48 | 354 | 0 |

| No. | STEEL NO. | ANNEALING AND GALVANIZING CONDITIONS | | | | TEMPER ROLLING | MICROSTRUCTURE | | | MECHANICAL PROPERTIES | | | | | | |
|---|---|---|---|---|---|---|---|---|---|---|---|---|---|---|---|---|
| | | ANNEALING TEMPERA-TURE (°C) | PRIMA-RY COOL-ING RATE (°C/s) | ALLOYING CONDI-TIONS | SECOND-ARY COOL-ING RATE (°C/s) | EXTEN-SION RATE (%) | PRIMARY MICROSTRUC-TU RE* | MARTEN-SITE AREA RATIO (%) | TOTAL AREA RATIO OF PERLITE AND BAINITE (%) | YP (MPa) | TS (MPa) | YR (%) | WH (MPa) | BH (MPa) | YP' (MPa) | YPEI AFTER AGING (%) |
| 19 | S | 780 | 5 | 520°C × 15s | 20 | 0.4 | F+M+P/B | 2.2 | 0.96 | 230 | 443 | 51.9 | 63 | 82 | 375 | 1.8 |
| 20 | T | 780 | 5 | 520°C × 15s | 20 | 0.4 | F+M+P/B | 11.6 | 0.52 | 272 | 566 | 48.1 | 102 | 41 | 415 | 0 |
| 21 | U | 780 | 12 | 520°C × 15s | 40 | 0,4 | F+M+P/B | 1.4 | 1.44 | 245 | 441 | 55.6 | 62 | 78 | 385 | 1.6 |
| 22 | V | 780 | 12 | 520°C × 15s | 40 | 0,4 | F+M+P/B | 1.1 | 0.53 | 261 | 432 | 60.4 | 63 | 57 | 381 | 1.2 |
| 40 | W | 785 | 12 | 520°C × 15s | 40 | 0.4 | F+M+P/B | 4.0 | 0.34 | 219 | 469 | 46.7 | 77 | 87 | 383 | 0 |
| 41 | X | 785 | 5 | 520°C × 15s | 20 | 0.4 | F+M+P/B | 3.9 | 0.24 | 207 | 454 | 45.6 | 73 | 79 | 359 | 0 |
| 42 | Y | 785 | 5 | 520°C × 15s | 20 | 0.4 | F+M+P/B | 3.8 | 0.26 | 210 | 458 | 45.9 | 72 | 80 | 362 | 0 |

* F: FERRITE, M: MARTENSITE, P: PERLITE, B: BAINITE

EP 2 184 374 B1

In Table 2, the compositions and the manufacturing conditions of Nos. 15 and 40 to 42 are within the range of the present invention, and the microstructures thereof are the examples of the present invention in which the area ratio of martensite is in the range of 2% to 15%, and the total area ratio of perlite and/or bainite is 1.0% or less. Compared to comparative examples, the examples of the present invention have a low YR and a high BH, and YPE1 after aging is also low, such as 0.2% or less.

On the other hand, according to Nos. 18 to 22 of the comparative examples manufactured using steel R to V which are outside the predetermined composition of the present invention, at least one of YR, BH, and YPE1 after aging are inferior.

As for No. 18 (steel R), the Mn content and the Cr content are outside the range of the present invention, and since the Mn content is particularly high, the BH amount is low. As for No. 19 (steel S), since the Mn content is low, the amount of solute C in ferrite is large, and a high BH is obtained; however, on the other hand, YPE1 after aging is high, so that the anti-aging property is inferior. As for No. 20 (steel T), since the Mn content is high, the amount of solute C in ferrite is small, so that BH is low. In addition, since ferrite is sold-solution strengthened, YP is relatively high, and the surface-distortion resistance is inferior. As for No. 21 (steel U), since the value of Mn+1.3Cr is low, perlite and bainite are generated during cooling performed after annealing, and a predetermined amount of martensite can not be ensured; hence, YR is relatively high, and YPE1 after aging is also high. As for No. 22 (steel V), since the amount of C is small, a predetermined amount of martensite can not be obtained; hence, YR is high, and YPE1 after aging is also high.

Example 2 (Reference example)

Several types of steel having chemical compositions of steel C, D, E, and G shown in Table 1 were melted by vacuum melting, and under conditions similar to those in Example 1, they were then processed by hot rolling, pickling, and cold rolling, followed by annealing at annealing temperatures shown in Table 3 for 60 seconds. Subsequently, after primary cooling under conditions shown in Table 3 and a galvanizing treatment (galvanizing bath temperature: 460°C) were performed, an alloying treatment was performed, and secondary cooling to a temperature of 150°C or less and temper rolling were then performed.

Samples were obtained from the galvanized steel sheets thus obtained, and by methods similar to those in Example 1, the area ratio of martensite and the total area ratio of perlite and/or bainite were measured. In addition, the tensile properties, work hardenability amount (WH), bake hardenability amount (BH), and YPE1 after an acceleration aging test were measured.

The obtained results are shown in Table 3 together with the manufacturing conditions.

Table 3

| No. | STEEL NO. | ANNEALING AND PLATING CONDITIONS | | | | TEMPER ROLLING | MICROSTRUCTURE | | | MECHANICAL PROPERTIES | | | | | | |
|---|---|---|---|---|---|---|---|---|---|---|---|---|---|---|---|---|
| | | ANNEALING TEMPERATURE (°C) | PRIMARY COOLING RATE (°C/s) | ALLOYING CONDITIONS | SECONDARY COOLING RATE (°C/s) | EXTENSION RATE (%) | PRIMARY MICROSTRUCTURE* | MARTENSITE AREA RATIO (%) | TOTAL AREA RATIO OF PERLITE AND BAINITE (%) | YP (MPa) | TS (MPa) | YR (%) | WH (MPa) | BH (MPa) | YP' (MPa) | YPEl AFTER AGING (%) |
| 23 | | 780 | 5 | 520°C × 15s | 20 | 0.4 | F+M+P/B | 2.6 | 0.69 | 223 | 453 | 49.2 | 64 | 72 | 359 | 0 |
| 24 | C | 740 | 5 | 520°C × 15s | 20 | 0.4 | F+M+P/B | 1.4 | 0.32 | 248 | 428 | 57.9 | 52 | 83 | 383 | 1.0 |
| 25 | | 760 | 5 | 520°C × 15s | 20 | 0.4 | F+M+P/B | 2.5 | 0.66 | 215 | 443 | 48.5 | 61 | 75 | 351 | 0 |
| 26 | | 800 | 5 | 520°C × 15s | 20 | 0.4 | F+M+P/B | 3.2 | 0.72 | 223 | 459 | 48.6 | 67 | 68 | 358 | 0 |
| 27 | | 840 | 5 | 520°C × 15s | 20 | 0.4 | F+M+P/B | | 1.06 | 249 | 478 | 52.1 | 68 | 59 | 376 | 0 |
| 28 | | 780 | 5 | 520°C × 15s | 20 | 0.4 | F+M+P/B | 2.6 | 0.58 | 217 | 452 | 48.0 | 67 | 66 | 350 | 0 |
| 29 | D | 780 | 5 | 520°C × 15s | 20 | NONE | F+M+P /B | 2.7 | 0.56 | 197 | 448 | 44.0 | 83 | 68 | 348 | 0 |
| 30 | | 800 | 5 | 520°C × 15s | 20 | 0.4 | F+M+P/B | 3.3 | 0,34 | 217 | 461 | 47.1 | 69 | 66 | 352 | 0 |
| 31 | | 800 | 5 | 520°C × 15s | 20 | 0.4 | F+M+P/B | 2.5 | 0.54 | 215 | 451 | 47.7 | 70 | 55 | 340 | 0 |
| 32 | | 800 | 2 | 520°C × 15s | 20 | 0.4 | F+M+P/B | 1.1 | 1.45 | 232 | 411 | 56.4 | 44 | 86 | 362 | 2.0 |
| 33 | E | 770 | 20 | 520°C × 15s | 20 | 0.4 | F+M+P/B | 1.3 | 1.31 | 233 | 421 | 55.3 | 48 | 82 | 363 | 1.0 |
| 34 | | 780 | 5 | 520°C × 15s | 3 | 0.4 | F+M+P/B | 1.4 | 1.41 | 236 | 429 | 55.0 | 49 | 80 | 365 | 0.8 |
| 35 | | 800 | 5 | 520°C × 15s | 40 | 0.4 | F+M+P/B | 3.2 | 0.55 | 227 | 459 | 49.5 | 71 | 53 | 351 | 0 |
| 36 | | 780 | 5 | 520°C × 15s | 20 | 0.4 | F+M+P/B | 4.0 | 0.58 | 228 | 473 | 48.2 | 71 | 65 | 364 | 0 |
| 37 | G | 760 | 5 | 520°C ×15s | 20 | NONE | F+M+P/B | 4.2 | 0.57 | 208 | 472 | 44.1 | 93 | 66 | 367 | 0 |
| - 38 | | 800 | 10 | 520°C × 15s | 20 | 0.4 | F+M+P/B | 5.4 | 0.62 | 243 | 495 | 49.1 | 79 | 65 | 387 | 0 |
| 39 | | 800 | 5 | NONE | 30 | 0.4 | F+M+P/B | 4.8 | 0.28 | 240 | 486 | 49.4 | 75 | 67 | 382 | 0 |

* F: FERRITE, M: MARTENSITE, P:PERLITE, B: BAINITE

As shown in Table 3, the manufacturing conditions of Reference examples Nos. 23, 25, 26, 28 to 31, and 35 to 39 are within the range of the present invention, and the microstructures thereof in which the area ratio of martensite is in the range of 2% to 15%, and the total area ratio of perlite and/or bainite is 1.0% or less. Compared to comparative examples, these Reference examples have a lower YR and a higher BH, and YPEl after aging is also smaller, such as 0.2% or less.

On the other hand, as for No. 24, since the annealing temperature is low, a predetermined amount of martensite can not be obtained, YR is high, and YPEl after aging is also high, so that the anti-aging property is inferior.

As for No. 27, since the annealing temperature is high, enrichment of elements in austenite during annealing is insufficient, and hence perlite and bainite are generated during the alloying treatment. As a result, compared to the example of the present invention having the same strength as that of No. 27, YR is relatively high.

As for No. 32, since the primary cooling rate is low, its cooling curve come across perlite and bainite noses, and the generation amounts thereof are increased, so that YP is increased. In addition, since perlite and bainite are generated, a predetermined amount of martensite can not be obtained, and due to remaining YPEl, YP is increased; hence, YR is relatively high, and YPEl after aging is also relatively high.

As for No. 33, since the primary cooling rate is high, enrichment of elements in austenite is insufficient, and perlite and bainite are liable to be generated during the alloying treatment. As a result, the martensite area ratio obtained after cooling is decreased, YR is relatively high, and YPEl after aging is also high.

As for No. 34, since the secondary cooling rate is low, austenite is decomposed into perlite and bainite in a temperature range of approximately 400 to 500°C during the secondary cooling, and the amounts thereof are increased; hence, the martensite area ratio obtained after cooling is decreased. Accordingly, YR is relatively high, and YPEl after aging is also high.

Industrial Applicability

Since the high strength galvanized steel sheet of the present invention has a low yield stress and also has superior anti-aging property and bake hardenability, the steel sheet can be applied to parts which require high formability, such as automobile inner and outer plate application.

**Claims**

1. A high strength galvanized steel sheet having a tensile strength of 340 MPa or more measured according to JIS Z2241 and having a composition consisting of, on a mass percent basis, 0.01% to 0.05% or less of C, 0.2% or less of Si, more than 1.0% to 1.8% of Mn, 0.10% or less of P, 0.03% or less of S, 0.1% or less of Al, less than 0.005% of N, more than 0.5% of Cr, 0.0005% or more to 0.01% or less of B, optionally further at least one of, 0.15% or less of Mo, 0.5% or less of V, 0.1% or less of Ti, and 0.1% or less of Nb, and the balance being iron and inevitable impurities, in which $1.9 \leq Mn + 1.3Cr \leq 2.8$ in mass% holds, wherein the microstructure consists of a ferrite phase and 2% to 15% of martensite on an area ratio basis, and the total area ratio of pearlite and/or bainite is 1.0% or less and optionally retained $\gamma$ and/or inevitable carbides having an area ratio of approximately 1.0%.

2. The high strength galvanized steel sheet having excellent press formability, according to Claim 1, wherein, on a mass percent basis, the Cr content is more than 0.65%, and the Mn content is more than 1.0% to 1.6%.

3. A method for manufacturing a high strength galvanized steel sheet according to claim 1 or 2, comprising the steps of: performing hot rolling and cold rolling of a steel slab having the composition according to Claim 1 or 2; then performing annealing at an annealing temperature of more than 750°C to less than 820°C; performing cooling at an average cooling rate of 3 to 15°C/s in a temperature range from the annealing temperature to a temperature at which dipping into a galvanizing bath is performed; performing galvanizing; and then performing cooling at an average cooling rate of 5°C/s or more to a temperature of the Ms point or less, wherein annealing and galvanizing are performed in a CGL.

4. The method for manufacturing a high strength galvanized steel sheet having excellent press formability, according to Claim 3, further comprising the step of, after the step of performing galvanizing, performing an alloying treatment of a galvanizing layer.

**Patentansprüche**

1. Hochfestes verzinktes Stahlblech, das eine Zugfestigkeit von 340 MPa oder mehr, gemessen gemäß JIS Z2241, und eine Zusammensetzung hat,, die in Masse-% aus 0,01% bis 0,05% oder weniger C, 0,2% oder weniger Si, mehr als 1,0% bis 1,8% Mn, 0,10% oder weniger P, 0,03% oder weniger S, 0,1% oder weniger Al, weniger als 0,005% N, mehr als 0,5% Cr, 0,0005% oder mehr bis 0,01% oder weniger B, optional des Weiteren 0,15% oder weniger Mo, 0,5% oder weniger V, 0,1% oder weniger Ti oder/und 0,1% weniger Nb besteht, wobei der Rest Eisen sowie unvermeidbare Verunreinigungen sind, $1,9 \leq Mn + 1,3Cr \leq 2,8$ in Masse-% gilt und die Mikrostruktur aus einer Ferrit-Phase sowie 2% bis 15% Martensit auf Basis des Flächenanteils besteht, und der Gesamt-Flächenanteil von Perlit und/oder Bainit 1,0% oder weniger beträgt und optional aus Restaustenit und/oder unvermeidbaren Carbiden mit einem Flächenanteil von ungefähr 1,0%.

2. Hochfestes verzinktes Stahlblech mit ausgezeichneter Press-Formbarkeit nach Anspruch 1, wobei der Cr-Gehalt In Masse-% mehr als 0,65 % beträgt und der Mn-Gehalt mehr als 1,0 % bis 1,6 % beträgt.

3. Verfahren zum Herstellen eines hochfesten verzinkten Stahlblechs nach Anspruch 1 oder 2, das die Schritte umfasst, in denen Warmwalzen und Kaltwalzen einer Stahlbramme mit der Zusammensetzung nach Anspruch 1 oder 2 durchgeführt wird; anschließend Glühen bei einer Glühtemperatur von über 750 °C bis unter 820 °C durchgeführt wird; Abkühlen mit einer durchschnittlichen Abkühlgeschwindigkeit von 3 bis 15 °C/s in einem Temperaturbereich von der Glühtemperatur bis zu einer Temperatur durchgeführt wird, bei der Eintauchen in ein Verzinkungsbad durchgeführt wird; Verzinkung durchgeführt wird; und anschließend Abkühlen mit einer durchschnittlichen Abkühlgeschwindigkeit von 5 °C/s oder mehr auf eine Temperatur des Ms-Punktes oder darunter durchgeführt wird, wobei Glühen und Verzinken in einer CGL durchgeführt werden.

4. Verfahren zum Herstellen eines hochfesten verzinkten Stahlblechs mit ausgezeichneter Press-Formbarkeit nach Anspruch 3, das des Weiteren nach dem Schritt des Durchführens des Verzinkens den Schritt umfasst, in dem eine Legierungsbehandlung einer Verzinkungsschicht durchgeführt wird.

**Revendications**

1. Tôle d'acier galvanisée à haute résistance ayant une résistance à la traction de 340 MPa ou plus mesurée selon la norme JIS Z2241 et ayant une composition constituée, sur une base de pourcentage massique, de 0,01 % à 0,05 % ou moins de C, 0,2 % ou moins de Si, : 0,02 % ou moins, de plus de 1,0 % à 1,8 % de Mn, 0,10 % ou moins de P, 0,03 % ou moins de S, 0,1 % ou moins d'Al, moins de 0,005 % de N, plus de 0,5 % de Cr, de 0,0005 % ou plus à 0,01 % ou moins de B, éventuellement également d'au moins un élément parmi 0,15 % ou moins de Mo, 0,5 % ou moins de V, 0,1 % ou moins de Ti et 0,1 % ou moins de Nb, le reste étant du fer et des impuretés inévitables, dans laquelle $1,9 \leq Mn + 1,3Cr \leq 2,8$ en % massique est respectée,
dans laquelle la microstructure est constituée d'une phase ferrite et de 2 % à 15 % de martensite sur une base de fraction surfacique, et la fraction surfacique totale de perlite et/ou de bainite est de 1,0 % ou moins, et une phase γ éventuellement résiduelle et/ou les carbures inévitables ayant une fraction surfacique d'environ 1,0 %.

2. Tôle d'acier galvanisée à haute résistance ayant une excellente aptitude au formage à la presse, selon la revendication 1, dans laquelle, sur une base de pourcentage massique, la teneur en Cr est supérieure à 0,65 % et la teneur en Mn est supérieure à 1,0 % jusqu'à 1,6 %.

3. Procédé de fabrication d'une tôle d'acier galvanisée à haute résistance selon la revendication 1 ou 2, comprenant les étapes consistant : à effectuer un laminage à chaud et un laminage à froid d'une brame d'acier ayant la composition selon la revendication 1 ou 2 ; puis à effectuer un recuit à une température de recuit de plus de 750 °C à moins de 820 °C ; à effectuer un refroidissement à une vitesse de refroidissement moyenne de 3 à 15 °C/s dans une plage de température allant de la température de recuit à une température à laquelle une immersion dans un bain de galvanisation est effectuée ; à effectuer une galvanisation ; puis à effectuer un refroidissement à une vitesse de refroidissement moyenne de 5 °C/s ou plus jusqu'à une température inférieure ou égale au point Ms, le recuit et la galvanisation étant effectués sur une ligne de galvanisation en continu (CGL).

4. Procédé de fabrication d'une tôle d'acier galvanisée à haute résistance ayant une excellente aptitude au formage à la presse, selon la revendication 3, comprenant en outre l'étape consistant, après l'étape consistant à effectuer une galvanisation, à effectuer un traitement d'alliation d'une couche de galvanisation.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001303178 A
- JP 6122940 A
- JP 2005281867 A
- JP 2006233249 A
- JP 2006052465 A

**Non-patent literature cited in the description**

- **HUNDY, B. B.** Accelerated Strain Ageing of Mild Steel. *J. Iron & Steel Inst.,* 1954, vol. 178, 34-38